# EUROPEAN PATENT SPECIFICATION

(11) **EP 1 625 500 B1**
(45) Date of publication and mention of the grant of the patent: **25.07.2007**
(21) Application number: 04752338.6
(22) Date of filing: 14.05.2004
(51) Int. Cl.: G06F 11/14

(54) **SYSTEM AND METHOD OF MANAGING BACKUP MEDIA IN A COMPUTING ENVIRONMENT**
SYSTEM UND VERFAHREN ZUR VERWALTUNG VON BACKUP-MEDIEN IN EINER DATENVERARBEITUNGSUMGEBUNG
SYSTEME ET PROCEDE DE GESTION DE SUPPORTS DE SAUVEGARDE DANS UN ENVIRONNEMENT INFORMATIQUE

(30) Priority: 14.05.2003 US 438260
(43) Date of publication of application: 15.02.2006
(73) Proprietor: Oliver, Jack K., Irving, TX 75038 (US)
(72) Inventor: Oliver, Jack K., Irving, TX 75038 (US)
(74) Representative: Lohr, Georg
(86) International application number: PCT/US2004/015305
(87) International publication number: WO 2004/104835

(56) References cited:
- WO-A-03/025795
- US-A- 5 673 382
- US-A- 6 038 379
- US-A- 6 154 817
- US-A1- 2002 095 416

## Description

### BACKGROUND OF THE INVENTION

### 1. Field of the Invention

The present invention relates to a system for tracking and managing backup storage media and, more particularly, to a centralized media management system for use in a computing environment having multiple, disparate hardware and software systems and backup applications.

### 2. Description of the Related Art

In order to ensure that original data is not lost, a copy of that data is typically stored in another medium. Should the original data be lost or damaged, the copied data is then available to restore the original data. This process is generally known as disaster recovery or backup and restore. However, the amounts of data stored and backed up has grown at almost exponential rates. This dramatic rise in the amount of data required to be backed up is attributed to many factors, such as the decreasing costs of disk space, the increasing processing power, demands of the users, etc. Further, most corporate computing environments have disparate hardware operating systems and backup applications further complicating backup and restore.

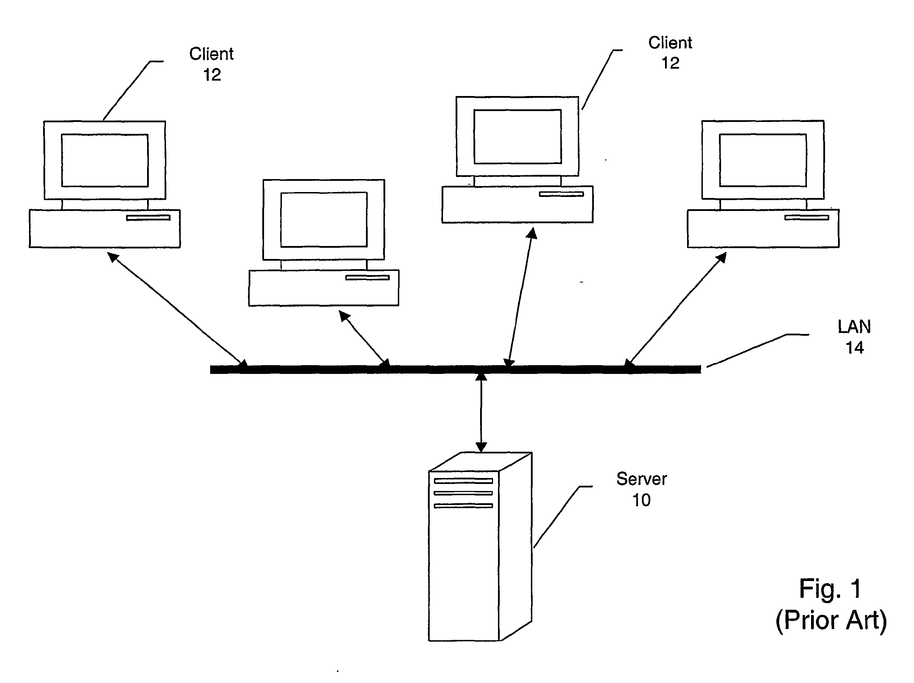

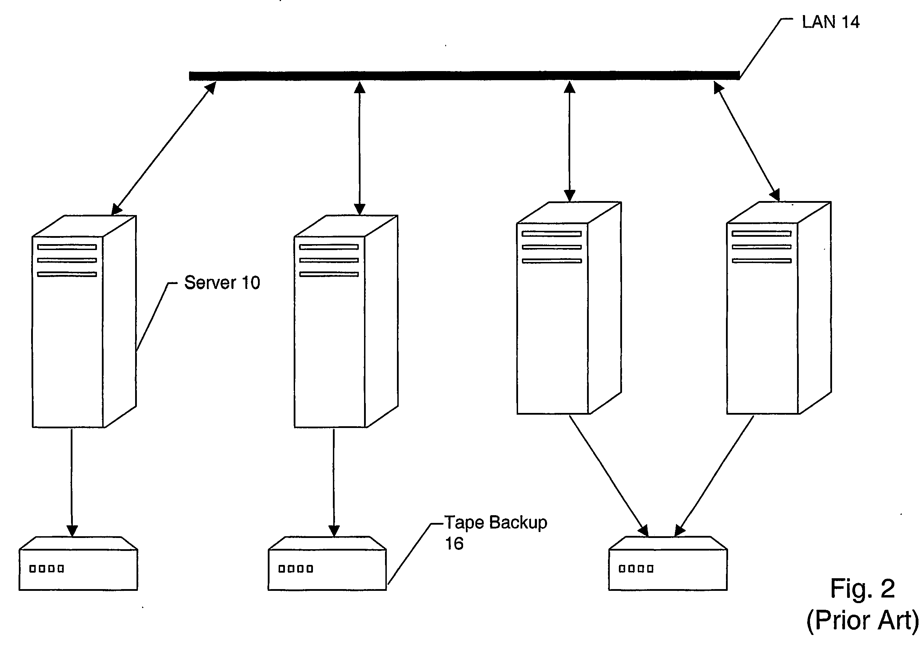

In the simplified network shown in Fig. 1, a plurality of clients 12 are connected via a network, such as LAN 14, to a server 10. Fig. 2 shows a slightly more complex system wherein a large number of clients might be attached to a network 14 in communication with a large number of servers 10. Conventionally, each server 10 is backed up using some type of removal storage media, such as tape cartridges; a tape backup recording device is shown as reference numeral 16 in Fig. 2. In the network of Fig. 2, the backup tape cartridges can be recorded using spreadsheets and handwritten notes to track the tapes' location and contents. In typical computing environments, such backup tapes are "vaulted" or moved to an offsite location so that in the event of a physical disaster to the computing environment, the backup tapes are not destroyed.

Computing environments, however, have become quite complex over the network depicted in Fig. 2. For example, a computer network might have a storage area network (SAN), network attached storage (NAS), or direct attached storage (DAS) environments for data storage. Such computing environments can be seen in U.S. Patent Nos. 6,564,252; 6,564,228; and 6,557,123. Such complex computing environments often include a tape library for onsite tape consolidation equipped with a mixture of tape drives, varying connectivity interfaces, tape cartridge robotics, and thousands of tape cartridge slots.

A prime difficulty in such modem, complex computing environments is that the network is typically complex and sourced from a variety of different vendors running a variety of different operating systems and backup applications. That is, it is common to see servers from IBM, Hewlett-Packard, Dell Computer, or Sun Microsystems all running different operating systems, such as Unix, Windows NT, or Lennox having a different databases, such as Oracle, SQL, DB2, with a variety of backup applications. Such backup applications might be from Legato, Veritas, Tivoli, LXI, Computer Associates, or Hewlett-Packard. Further, mainframe computing might also be a portion of the computing environment. A number of attempts at backing up disparate applications have been made, such as U.S. Patent No. 6,038,379.

With such a disparate platforms, systems, and applications in a typical complex computing environment, it is difficult to track and manage the backup storage media both onsite in the computing environment and offsite at a secure storage facility (i.e., vault). Therefore, there exists a need to provide a system which will manage backup storage media in such a complex, heterogeneous, disparate computing network environment both on and offsite.

US 6,154,817 discloses a device and a method for managing storage media for back up applications. The method permits an automated organisation and handling of back up media based on user selectable storage rules. The method does not address the problem which arises in heterogeneous networks, where disparate back up application's tracking data have to be administered.

### SUMMARY OF THE INVENTION

The present invention, which is defined in the appended independent claims, provides a media management system for a computing environment having multiple disparate hardware, operating systems, and backup applications so that the storage media can be managed during their entire life cycle. That is, the storage media is managed during its entire life cycle, from backup procedures, transportation to the vault, in the vault, during the return or restore operations to the computing environment, and reuse or "scratch."

Broadly, the media management system includes a consolidated tracking database and a plurality of import agents specific for each unique backup application in the computing environment. The import agents operate to extract backup information from each of the backup applications and store the backup information in the consolidated database. A rules-based policy vault manager interfaces with the consolidated tracking database to accept user-defined rules or policies concerning the backup storage media, and outputs instructions for removing or maintaining the backup storage media.

In one form, the method of storage management in accordance with the present invention contemplates a heterogeneous computing environment connecting a plurality of servers to a network wherein at least some of the servers have different backup applications to backup data to storage media. Storage media information is stored in a native form usable by the proprietary backup application, and the method of the present invention extracts storage media information from such native form and normalizes the storage media before storing such storage media information in a consolidated tracking database. The consolidated tracking database is used to manage the movement and location of the storage media.

There are many types of storage media management concepts that can be utilized in the present invention, such as inputting company specific policies to the consolidated tracking database concerning the movement of the storage media from onsite to the vault, and designated times for movement and maintenance criteria at the vault. Additionally, the storage media itself can be tracked, such as tape usage. In a preferred form, the consolidated tracking database includes export agents for taking a relevant storage media information and exporting it to the native backup application. This system and method of storage media management is particularly useful in complex computing environments having disparate hardware, operating systems, and backup applications.

### BRIEF DESCRIPTION OF THE DRAWINGS

Other objects and advantages of the invention will become apparent upon reading the following detailed description and upon reference to the accompanying drawings in which:
Fig. 1 is a prior art schematic depicting a simplified, client server, computing network.
Fig. 2 is a prior art schematic depicting a multiple server network having different backup applications and tape backup systems.
Fig. 3 is a schematic depicting a computing network having multiple servers connected to a LAN and a tape library.
Fig. 4 is a schematic depicting a computing environment wherein the storage media (i.e., tapes) are transported offsite (i.e., vault).
Fig. 5 is a diagram showing the functional interface to a consolidated tracking database with disparate backup applications, reporting functions, and a tape library.
Fig. 6 is a diagram showing the operation of the consolidated tracking database with backup applications.

### DETAILED DESCRIPTION OF THE PREFERRED EMBODIMENTS

Corporate computing has increased in complexity in recent years due to a variety of factors. First, mergers and acquisitions have forced an integration problem on many corporate computing centers, where multiple platforms and multiple backup applications have been mixed into a disparate, heterogeneous, computing environment. Second, many government regulations require certain types of backups and protection, for example, securities and health regulatory requirements have specific requirements depending on the data. Third, data growth has grown at an exponential rate while the need for control with fewer human resources has increased. Further, backup media must be controlled and tracked not only in the computing center, but also offsite at the vault location.

### 1. General Overview

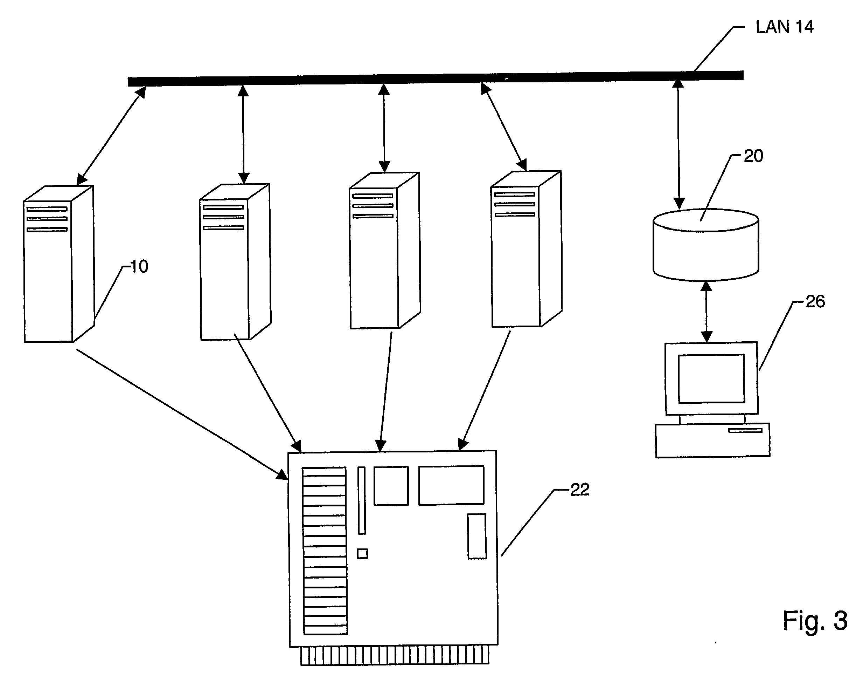

Broadly speaking, Fig. 3 depicts a computing environment in accordance with the present invention, wherein a plurality of servers 10 are connected to a network LAN 14. Of course, the depiction is for simplicity and the network may be much more complex, including different network topologies and data storage solutions such as a SAN, NAS, or DAS. Regardless of the particular network topology, the servers 10 represent data storage units and may include iseries or mainframe computing systems. In the embodiment illustrated in Figure 3 the network servers 10 are connected to a tape library device 22. The tape library device 22 may be equipped with a mixture of tape drives, varying conductivity interfaces, tape handling robotics, and expansion capabilities for additional tape cartridge slots. Assuming the servers 10 are backup servers running different backup applications from a number of different vendors, sharing the tape library 22 can be difficult.

In the computing topology of Fig. 3, a consolidated database 20 is also shown connected to the network 14. A interface console 26 provides access to the consolidated database 20 providing centralized capabilities wherein all the disparate backup applications running on servers 10 may be accessed. That is, the consolidated database 20 and interface 26 may communicate with the disparate backup applications residing on servers 10. While Fig. 3 shows consolidated database 20 connected to the network 14, direct alternative interface to tape library 22 may be made.

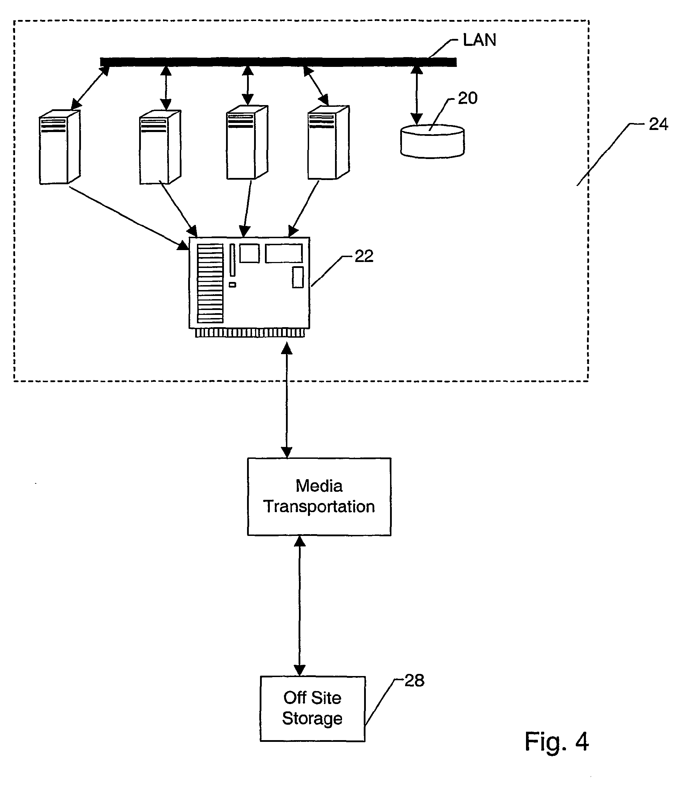

Fig. 4 shows the physical layout between the corporate computing environment 24 and the offsite storage or vault 28. Fig. 4 depicts the physical layout and the necessity for the automated scheduling for movement of the tapes between the corporate computing environment 24 and the offsite storage location 28.

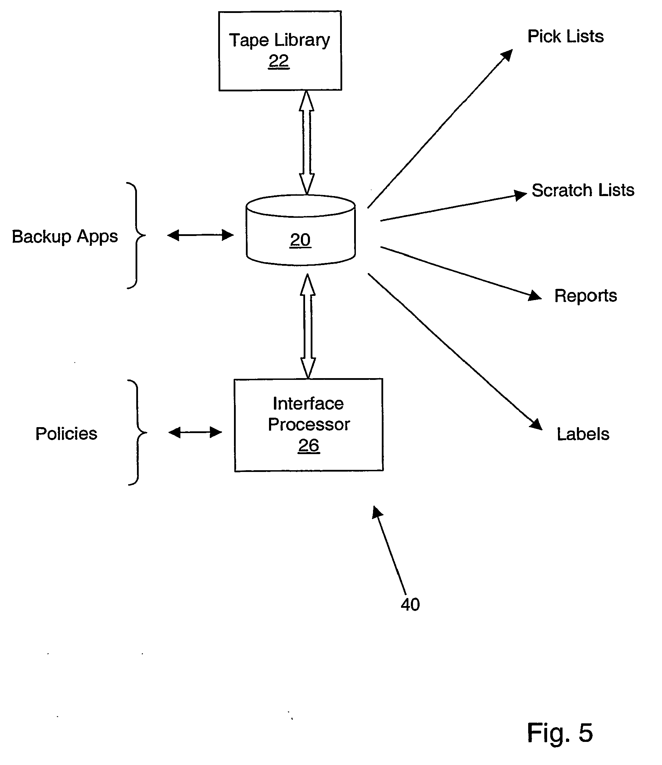

While Fig. 3 represents a the physical layout of a media management system 40 in accordance with a preferred embodiment of the present invention, Fig. 5 is the functional depiction. As can be seen in Fig. 5, tape management policies may be entered into the interface 26 for control of the operation of tape movement. Such policy management provides a single point of control for implementing, e.g., move schedules of the backup media between the corporate computing environment 24 and offsite storage 28. As seen in Fig. 5, the consolidated database 20 accepts tape information from the multiple and disparate backup applications and keeps track of the tape information in the single consolidated database 20. This provides an enterprise view of the backup media and the ability to control and report on the tape media, such as pick lists, scratch lists, reports, and label generation.

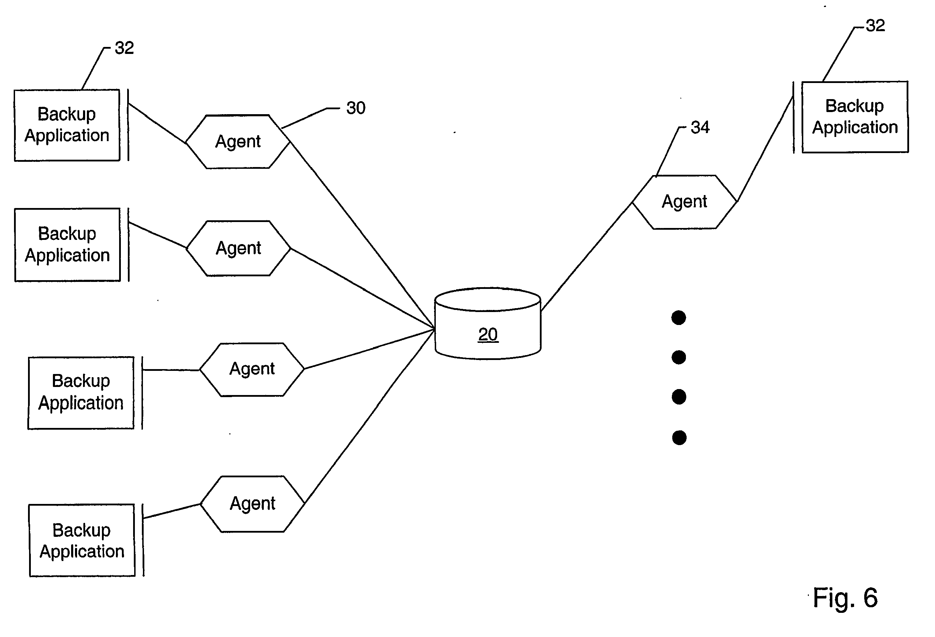

In more detail, Fig. 6 shows how import agents 30 interface to backup applications 32. As can be appreciated, the proprietary backup applications 32 each store tape information in a proprietary format. Broadly speaking, the import agents 30 map the format of the proprietary backup applications to a "generic" format for use by the consolidated database 20. This allows the tape information from each backup application 32 to be consolidated in the single point of control database 20.

The normal processing cycle for the system shown in Figs. 5 and 6 is the following:
1. Tape backup application data is extracted from the backup applications 32;
2. The extracted tape information is input to the consolidated database 20;
3. The consolidated database 20 is updated using the latest tape information from the backup application 32;
4. Information from the tape library 22 is used to update the consolidated database 20;
5. Scratchlists and other reports such as picklists reports and labels are generated from the consolidated database 20;
6. A vault management process is run (Fig. 4) which dictates the move and/or return of the offsite tapes in accordance with the policies;
7. The changes from the consolidated database 20 are periodically used to update the backup applications 32 using export agents 34 (Fig. 6).

### 2. Detailed Description

### A. Agents

The media management system 40 hereof consolidates corporate backup information from multiple servers, hosts, platforms and network backup applications 10, as shown in Figures 3,6, into a consolidated database 20. An "agent" 30,34 is created within the media management system 40 for each network backup application 32. The "agent" is a set of programs and routines that control the importing as at 30 (pulling information from the network backup application 32) and exporting as at 34 (sending vault and movement information back to the network backup application 32).

An import agent 32 can be run in two modes. First, in a simple network on a single server where the media management system and the network backup application are both installed as in Figures 1 and 2. Second, in a multiple servers/hosts environment as in Figure 3 where the media management system is installed on one server/host and the network backup applications are installed on any number of servers/hosts 10.

Currently agents exist for the following backup applications within the media management system:
- Veritas NetBackup
- Legato NetWorker
- HP OmniBack
- IBM / Tivoli Storage Manager
- BakBone NetVault
- LXI MMS
- a generic agent that can be configured for any application or product, including mainframe
Defined update agents are agents that have been created for specific backup applications. The generic agent programs are provided for users wishing to automate the input of tape database changes from a source application. The media management system can also send processed record information back to the source application as at 34 in Figure 6. Once defined, the agent 30, 34 runs under the control of the Gateway/Multi-Host System 24.

All activity processed by the generic and defined agents is written to a log file called *tins_log* located in the {$TMS_HOME} directory. For activity processed via the Gateway feature (described later in this section), information is also written to the *gtwy_log* and *gwy_log* files located in the {$TMS_HOME} directory.

The steps involved in importing the data are similar for all the agents. The following example shows the processing of the Legato NetWorker import agent:

To execute an import agent initiated by the user or a job scheduling product:
1. The media management system requests that the backup application report command returns the required tape volume fields in a specific order and restrict the length of each field to the required field length. The output is redirected to a file by using UNIX standard output redirection.
2. Each line in the produced file is read and copied to a memory structure in the program, which corresponds to the requested format (field list order and lengths).
3. The tape volume data is validated for appropriate data types for certain fields, upper/lower case checking and converted as needed.
4. The tape volume data is added to the database.
To process an import agent vaulting occurs as defined by the user. As part of the vaulting process, the tape volumes are changed to reflect their new locations based on the corporate vaulting policies which are predefined by the user as in Figure 6.

To execute an export agent (Figure 6) upon completion of the vaulting process, the media management system, through a backup application command, requests that the backup application change the value of the tape volume location field in NetWorker's database for the volume involved. This occurs for all tape volumes vaulted by the media management system.

The NetWorker Defined Agent interacts with standard NetWorker interfaces to both extract and update volume data between the media management system and NetWorker. Volume data created by NetWorker may be updated in the media management system as frequently as desired. The media management system can then update NetWorker when volumes are moved offsite by the Vault Management System. All media management system functions are available for processing, reporting, and querying NetWorker volumes. Multiple NetWorker zones are supported.

With the exceptions of Tape Duplication and Vault management, tape volume information flows one way: from NetWorker to the media management system. The Tape Duplication feature can be used to create a duplicate tape before Vault management moves the original volume offsite. Vault management updates the NetWorker volume location field with the media Manager vault name, or clears it.

The ttk_nw program queries NetWorker and adds/updates the volume information in media management system. The ttk_nw_vlt program updates the NetWorker volume location field.

### Corresponding Data Fields

The following chart depicts the Networker data fields and the corresponding media management system database fields updated by the NetWorker Defined Agent.

| NetWorker Data Fields | | Media Manager Data Fields |
|---|---|---|
| Field Name | | Field Name |
| Volid* | | VOLSER |
| | | IVOLSER |
| Barcode (if present)* | | VOLSER |
| Volume/Label Name | | FILE NAME |
| Volume flags | | READONLY flag |
| Volume Expiration | | EXPIRATION |
| Pool | | POOL |
| | | FILE NAME (If the -f argument is specified on the import process.) |
| Number of Mounts | | UCOUNT |
| Access Date | | CREATE DATE |
| | | REF DATE |
| Labeled Date | | CREATE DATE |
| | | REF DATE |
| | | LIB DATE |
| Tape Type | | TYPE |
| Volume Location & Access | | LOCATION ID (if Access=OFFSITE) |
| Volume flags | | SCRATCH flag is set if Recyclable flag is set |

| | | |
|---|---|---|
| *If no barcode is present: VOLSER=Volid IVOLSER=Volid *If a barcode is present: VOLSER=Barcode IVOLSER=Volid NOTE: VOLSER and IVOLSER fields support up to 12 characters. The following fields are set to default values: OWNER=networker PRG=networker (create program) OS=UNIX CRHOST=** RFHOST=** LBHOST=** ** If the ttk_nw program is processed using the -h argument, fields are populated with that value. If the -h argument is not used, fields are populated with the local host name. | | |

Vault management is most efficient using filename patterns. To facilitate volume movement, specify the -f argument on the NetWorker Import Agent command (ttk_nw). The -f argument instructs the media management system 40 to populate the filename field with the contents of the NetWorker pool field. If the pool field value contains any spaces, they are replaced with an underscore (_) character in the Media Manager filename field.

If there is a conflict between the importing data and the management system database 20 for the create date field, and the management system database 20 shows that volume to be at an offsite location; the media management system will automatically return the volume back to the onsite location, then update the management system database 20 fields with values contained in the importing record. If the volume is part of a multi-volume set, the entire set is processed in the same manner.

To configure, the media management system uses NetWorker commands to retrieve volume information from NetWorker (mminfo), send vault information back to NetWorker (mmlocate), for the Tape Duplication feature (nsrclone), and for the Automatic Tape Ejection feature (nsrjb). Tape Duplication and Automatic Tape Ejection features are useful with the tape library 22 of Figure 3.

Configuration involves creating symbolic links to the NetWorker commands, writing simple scripts to interface with NetWorker, and setting up remote access commands if needed. If the media management system is installed on the same host as the tape application, then remote shell/remote copy or secure shell/secure copy commands are not required.

On the NetWorker server and/or storage node, create symbolic links to the NetWorker mminfo and mmlocate commands by running the following commands:
In -s /*<NetWorker path>*/*mminfo* /usr/local/bin/mminfo
In -s /*<NetWorker path>*/mmlocate /usr/local/bin/mmlocate
If planning to use the Tape Duplication feature: A copy of the nsrclone command must be created in the /usr/local/bin directory on the NetWorker server and/or storage node, then the permissions to the copied command changed. Run the following commands signed on as root:
cp *I<NetWorker path*>/nsrclone /usr/local/bin
chmod 6711 /usr/local/bin/nsrclone
If planning to use the Automatic Tape Ejection feature: A copy of the nsrjb command must be created on the Networker server and/or storage node, and the permissions to the copied command changed. Run the following commands, signed on as root:
cp /*<NetWorker path>*/nsrjb/usr/local/bin
chmod 6711 /usr/local/bin/nsrjb
NOTE: If the commands are changed by a release level upgrade to the tape application, the commands must be re-copied.
The ttk_nw and ttk_nw_vlt programs can use either the UNIX remote shell (rsh) and remote copy (rcp) commands or the secure shell (ssh) and secure copy (scp) commands

To import data using the NetWorker agent from a NetWorker server running on a Windows NT system, follow these additional steps:
NETWORKER MUST BE INSTALLED ON A UNIX SYSTEM ACCESSIBLE TO THE UNIX SYSTEM WITH MEDIA MANAGEMENT SYSTEM.
Add an entry in the /*etc*/*hosts* file for the Windows NT NetWorker server.
Run the NetWorker agent with the following command to import the data into media management system:
   ttk_nw -h *unix system -s Windows NT server -f*
   To export the data, run the following command:
   ttk_nw_vlt -h *unix system -s Windows NT server*
In use, adding and updating NetWorker tape volumes is done entirely by NetWorker with the exceptions of Tape Duplication and Vault Management. The ttk_nw program should be run on a frequent basis to ensure that media management system accurately reflects the volume status.

How to use the ttk_nw program:
ttk_nw
   - h <networker_host> Specifies the UNIX based machine to establish communications with first in the network. It must be a machine that is a NetWorker client which can issue the mminfo command. If omitted the local host is used. Optional.
   - s <networker_server> Specifies the the NetWorker server name from which data is to be imported. This argument is typically used if the NetWorker server is not a UNIX based machine. Optional.
   - r <networker_release> Specifies the release of Legato NetWorker from which data is to be imported. Valid released are 553, 601, 602, 610 and 611. Periods in the release level are not permitted. The default is 602. Optional.
   - f filename Specifies that the media management system filename field is to be populated with the contents of the NetWorker pool field. This argument is required to reference the filename field in move job definitions, and for using the Tape Duplication feature. Otherwise, it is optional.
   - u media usage based Specifies whether to set the media management system flag "NO
      vaulting VAULT" if the NetWorker volume full flag is checked. When STRVMS runs and the "NO VAULT" flag is set then media management system will ignore those volumes when move records are generated. Optional.
   - e expiration argument Specifies the volume will be set to expired if no save sets are found. Optional.
   - t test mode Runs the agent in test mode which causes all normal processing to occur yet the media management system database is not updated. Optional.

### Example:

### ttk_nw -h systema -f

This will retrieve NetWorker 6.0.2 tape volume information from remote host systema, and update the media management system database on the local host. The filename field will.be populated with the NetWorker pool field.

Multiple NetWorker server example script:
ttk_nw -h systema -f
ttk_nw -h systemb -f
ttk_nw -h systemc -f
ttk_nw -h systemd -f

How to use the ttk_nw_vlt program:
The ttk_nw_vlt program requires a userid that has NetWorker administrator privilege.
   ttk_nw_vlt
   - f <agent_vault_list> Specifies a file read as input that controls which volumes are updated in NetWorker. The agent vault list is generated when the strvms -a command is processed. This is a required parameter.
   - h <networker_host> Specifies the UNIX based machine to establish communications with first in the network. It must be a machine that is a NetWorker client which can issue the mmlocate command. If omitted the local host is used. Optional.
   - s <networker_server> Specifies the NetWorker server name to which data is to be exported. This argument is typically used if the NetWorker server is not a UNIX based machine (Windows NT, etc.). Optional.
   - t test mode Runs the agent in test mode which causes all normal processing to occur yet the media management system database is not updated. Optional.
The ttk_nw_vlt program should be run after every execution of the strvms/runpend programs. It should be run for each NetWorker host. These programs are part of the Vault Management System.

### Example:

strvms - a moved_vols -p
ttk_nw_vlt -f moved_vols -h systema

### Multiple NetWorker server script:

strvms -a moved_vols -p
ttk_nw_vlt -f moved_vols -h systema
ttk_nw_vlt -f moved_vols -h systemb
ttk_nw_vlt -f moved_vols -h systemc
ttk_nw_vlt -f moved_vols -h systemd

### Example List, long display option

| CREATION/REFERENCE DATA | | |
|---|---|---|
| VOLSER=1758039041 | IVOLSER=1758039041 | EXDATE/CODE=20030119 |
| FILE_NAME=UA0002 | | |
| LAVEL=NONE | OWNER=networker | USERID= |
| JOBID= | PRG=networker | GROUP= |
| SEQUENCE=0/0 | UNCR= | UNREF= |
| FIRST_VOL=1758039041 | PREV_VOL= | NEXT_VOL= |
| ENTRY_DATE=20010219/16:01 | CREATE_DATE=20010121/20:00 REF_DATE=20010121/20:00 | |
| RFUSERID= | LBUSERID=tms | LIB_DATE=20010219/16:05 |
| CRHOST=p2ibm | RFHOST=p2ibm | LBHOST=dogbert |
| TYPE= | DENSITY= | FORMAT= |
| MEDIA_CAPACITY= 0 MB | MEDIA_USAGE= 0 MB | FILESIZE= 0MB |
| FLAGS= [RDONLY] | | |
| BKLEVEL=0 | BKDIR= | |
| LOCATION_ID=DOGNWVLT | | VSLOT= 2 |
| LOCATION_TXT=DOGNWVLT | | LIBRARY= |
| DVN= | OS=UNIX | POOL=AIXFULL |
| VENDOR= | | |
| UCOUNT=0 | CLCOUNT=0 | CLUSE=0 |
| CLDATE= | RD_ERRORS=0 | WR_ERRORS=0 |
| OUT_DATE=20010219 | RTN_DATE=20050510 | |
| COMMENTS= | | |
| > | | |
| Continue to the next record? <Y/N>> | | |

### Scratch Reporting

When a Legato NetWorker tape volume becomes "recyclable," the volume can be flagged as a scratch tape in the media management system database and included on a scratch list. This is done via the media management system scratch program.

### B. Management Reports

Standard management reports are included with The media management system. These reports are described in more detail in the following sections, and a sample of typical report output is also included. Each report can be executed from the UNIX command line, the character menu programs, or the GUI menu programs.

The GUI [Media Management System Management Reports] selection screen is launched from the [Librarian] menu. tms_rpt launches the character based menu described below. The user is allowed to choose any of the standard reports, and is prompted for format (landscape or portrait), lines per page, and destination (screen, file, or printer). Any user is allowed to run the media management system reports, but the typical report requestor will be the site Librarian.

Each report has two versions-a compact 80 column version which will print on a line printer or in portrait mode on a standard laser printer, and an expanded 132 column version which will print on a line printer or in landscape mode on a laser printer. Examples of each are included later in this document. The user is allowed to select the number of lines per page if the default of 55 prints too many or too few lines for the desired printer.

If the user chooses a file for the destination, a prompt for the filename will be issued. All media management system reports will be written to the {$TMS_HOME}/reports directory-if the directory does not exist, tms_rpt will create it. Once created, the report files can be pulled into mail documents or distributed in other ways.

If a printer is selected as the destination, tms_rpt will prompt for a printer destination. If the UNIX user has initialized a printer in the LPDEST environment variable, tms_rpt will use this as an assumed default printer. If LPDEST is empty, tms_rpt will use as the default printer the value of PTR (set automatically by the tms_env environment script that should be included in every user's login profile). The program will ask if the default is okay, and if not, will give the user the opportunity to select a different printer.

Upon completion of a report (usually in 2 to 10 seconds), the original menu screen is displayed.

The following is an example of a user selecting the audit report and sending it to a printer.
/home/tms > tms_rpt <CR>

| | SCREEN1: | | | |
|---|---|---|---|---|
| | | | Reports | |
| | | | | System: p2ibm |
| | Select one of the following: | | | |
| | 1. | Audit File | | |
| | 2. | Expiration | | |
| | 3. | File | | |
| | 4. | Recovery | | |
| | 5. | Media Error | | |
| | 6. | Media Usage | | |
| | 7. | Owner | | |
| | 8. | Volume | | |
| | 9. | Vault | | |

### Selection [ ]

| | SCREEN 2: | | | |
|---|---|---|---|---|
| | | | Reports | |
| | | | | System: p2ibm |
| | Select one of the following: | | | |
| | 1. | Audit File | | |
| | 2. | Expiration | | |
| | 3. | File | | |
| | 4. | Recovery | | |
| | 5. | Media Error | | |
| | 6. | Media Usage | | |
| | 7. | Owner | | |
| | 8. | Volume | | |
| | 9. | Vault | | |

### Selection [1]

1. Do you want portrait or landscape format? (Default=land) <port, land> [L]
2. How many lines per page? (55=default) [ ]
3. Do you want output to the screen, file, or printer? (S,F,P) [P]
4. Is printer cntlasr correct? (Y/N) [ Y ]
Note: Prompts 1,2,3, and 4 display sequentially after response to the preceding prompt.

### C. Scratch Reporting

The media management system scratch process can be used to provide listings of the volumes in the media management system database currently available for use (referred to in media management system as 'scratched' tapes or volumes). The scratch program is usually scheduled to process after updated data has been imported into The media management system via the Defined and/or the Generic Update Agent programs.

It should also be processed only after any librarian changes that are needed have been entered via the tmsx program. Usually, librarian changes are only necessary when managing all volume information via the media management system database utilities.

Once all database updates have completed, the scratch program is to be processed to review the tape expiration status updates. The expiration date and/or code information is compared to the current system date, and determines if the volume is now available for use. The scratch program sets the scratch flag in the media management system database to on, and includes the volume as a new scratch and the report is generated. The volume will continue to appear on the scratch report each time the scratch is executed (unless the -n argument is used, which indicates that The media management system is to include only new scratch volumes).

*An important note regarding scratch processing:* Since The media management system does not perform I/O functions on the tapes themselves, the scratch program is not used to provide any sort of data overwrite protection once they are mounted onto a device. The tape generating application from which the data originated is usually what provided this protection from accidental data loss.

### D. Vault Management System

The purpose of a vault (or container) management system is to minimize the risk of losing data by spreading it out over multiple locations. This way, if one location, such as the on-site data center is destroyed, data from another location can be retrieved and business can continue. With government regulations requiring that data be maintained for longer periods, multiple locations minimize the space required to keep tapes onsite. If for no other reason, keeping tapes at multiple locations reduces the security issues that could exist if all tapes were kept at a central location. media management system's Vault Management System (VMS) supports virtually limitless locations.

This section will review the following:
· tape movement strategies (location, container, vaulting)
· how to set up the VMS configuration files (vmsx utility)
· commands used to process the volume movement cycle
· move/return reports
· the tape duplication feature
· the automatic tape eject feature
· tape movement
· how to set up
· commands

### Tape Movement Strategies

The media management system provides a variety of tape movement options. From simple location moves, (using no containers or slots), to a complex schedule of container or vaulting patterns, The media management system provides the functions necessary to create and manage them with ease. Setting up The media management system is simple once you understand the concepts.

### Location Management

Locations are defined through a location definition. The definition includes the location name, address, contacts, telephone and fax numbers. When volumes move, The media management system verifies that the location exists and then moves the volume(s) to that location. Additional options include the ability to work with volumes, containers and slots at a location. When a volume returns, it returns to the location defined as the default location in the media management system database.

### Container Management Concepts

A container is a physical box that contains tapes. The number of tapes that the box holds depends on the size of the box and the size of the tapes. The container starts out at the data center where it is packed with tapes going to an offsite location for a user-defined period of time. The container is packed and locked by the user. Once complete, the container is retrieved by an offsite storage vendor and transferred to their location for safekeeping. When the user specified time has elapsed, the container returns to the user where it is unpacked and the tapes returned to the tape rack. Once the container has been unpacked, it is available for reuse. If an offsite tape is required for recovery, the container must be recalled from the offsite vendor.

### Vault Management Concepts

Vaulting (slot) management is accomplished by storing tapes individually at an offsite company's tape rack. This type of management requires that the user allocate a specific number of slots from an offsite storage vendor. The number of slots allocated usually equals the number of tapes at the location at any point in time. When tapes move offsite, the offsite storage vendor retrieves the tapes from the user and transfers them to available slots. If slot management is controlled by the user, the user must tell the vendor which slot to use. When the tape returns from offsite, it is placed in the user's tape rack. Since vaulting deals with each tape individually, packing and unpacking do not apply. If an offsite tape is required for recovery, it must be recalled from the offsite vendor.

### Move/Return Concepts

The move schedule definition defines the volume or range of volumes to move offsite, the location that the volumes are moving to, the move date if other than today, an optional container class and a return date. The media management system uses this definition to move the volume to an offsite location on the specified date and return it when the return date is equal to or less than the current date. If a container class is specified, the volumes are packed into the container based on the container class rules for packing. When the volume returns, the move/return record is deleted. If the volume returns in a container, it remains there until unpacked by the user.

Move jobs must be defined within The media management system. A move job defines the container class, move schedule, and calendar to use for volumes using this move job. If the name of the move job matches a saved file name, movement for volumes containing the file name will automatically occur provided the strvms and runpend commands have been scheduled.

Move schedules are used to logically group move schedule entries. A move schedule entry will specify the location where the volumes will move and how long they will stay at the specified location. If the volumes are moving to multiple locations, a move schedule entry should be added to the move schedule for each location.Container Class and Slots Concepts

The use of containers or slots (vaulting) is optional. If used, they can be associated to a container class definition. The container class defines the size and rules for packing. Rules for packing determine if multiple systems or multiple return dates can reside in the same container. Since slots can only hold one tape, the rules for packing do not apply.

Note: If there is a conflict between data being imported via one of the Defined Update Agents, and the media management system database for the create date field for a volume that the media management system database shows to be at an offsite location. The media management system will automatically return the volume back to the onsite location, then update the media management system database fields with values contained in the importing record. If the volume is part of a multi-volume set, the entire set is processed in the same manner.

## Claims

1. A media management system for use in a computing environment having multiple, disparate hardware platforms and operating systems, each having a backup application, the system comprising:
- a consolidated tracking database (20)
- a plurality of import agents (32), each import agent (32) being specific for a unique backup application and operable to extract backup information from the backup application in a native form usable by the backup application, to normalize said backup information and to store the normalized backup in-formation in said consolidated tracking database (20), and
- a rules-based policy vault manager, which accepts user-defined rules for media movement interfaces with the consolidated tracking database (20) and outputs instructions for moving backup media from the computing environment.

2. The media management system of claim 1, the backup information comprising storage media data content.

3. The media management system of claim 1, the computing environment including disparate operating systems and a tape backup recording device.

4. The media management system of claim 1, including export agents for writing backup information in respective backup applications.

5. The media management system of claim 1, the policy manager including tracking tape media usage and retirement.

6. The media management system of claim 1, including a tape library connected to the backup application and the consolidated tracking database.

7. The media management system of claim 6, including a control program coupled to the tape library for controlling the recording of data from the platforms to tape in the tape library.

8. The media management system of claim 1, including an input console interfaced to the consolidated tracking database for accepting the user-defined rules.

9. The media management system of claim 1, including a report manager for outputting pick lists and scratch lists.

10. A method of storage media management in a heterogeneous computing environment comprising:
connecting a plurality of servers (10) to a network;
operating a backup application on each server (10) to backup data on the server (10) to storage media, at least two of the backup applications being different;
storing information covering the storage media in a native form usable by the respective backup application;
extracting storage media information from said native form and normalizing said storage media information,
storing said normalized storage media information in a consolidated tracking database (20), and
managing the movement and location of said storage media using said consolidated tracking database (20).

11. The method of claim 10, wherein said managing step includes the substeps of moving the storage media to a location remote from said computing environment at a designated time and maintaining the storage media at said remote location for a designated period.

12. The method of claim 10, wherein said managing step includes inputting policies to the consolidated tracking database concerning movement of storage media to an offsite location.

13. The method of claim 10, including tracking the location of storage media in the computing environment and at offsite locations using said consolidated tracking database.

14. The method of claim 10, including reporting on the location, content, and usage of the storage media.

15. The method of claim 10, wherein said computing environment includes a storage area network (SAN), a plurality of different operating systems, a plurality of different servers, and a plurality of different backup applications.

16. A backup storage media manager for a heterogeneous computing environment comprising:
- a consolidated tracking database (20) for storing location and content information concerning backup storage media,
- a plurality of import agents (32), each import agent being connected to a backup application on a server in the computing environment, wherein each import agent (32) is operable to:
i. extract location and content information from the backup application, wherein said location and content information is extracted from information stored by the backup application in a native form,
ii. normalize said extracted location and content information and
iii. store said normalized location and content information in said consolidated tracking database (20); and
- an interface (26) to said consolidate tracking database (20) having functionality to accept user-defined movement and storage policies for backup storage media.

17. The storage media manager of claim 16, including a plurality of export agents operable for extracting location and content information from said consolidated database, and exporting said information to backup applications.

18. The storage media manager of claim 16, including an interface to a tape library for detecting the writing and content of storage media in the tape library, and for storing said writing and content information in said consolidated database.

## Patentansprüche

1. Medienverwaltungssystem zur Verwendung in einer Datenverarbeitungsumgebung mit mehreren getrennten Hardware-Plattformen und Betriebssystemen, deren jedes eine Backup-Anwendung besitzt, wobei das System Folgendes umfasst:
- eine konsolidierte Tracking-Datenbank (20);
- eine Mehrzahl von Importagenten (32), wobei jeder Import-Agent (32) spezifisch für eine bestimmte Backup-Anwendung ist und dazu verwendet werden kann, Backup-Informationen von der Backup-Anwendung in einer von der Backup-Anwendung nutzbaren nativen Form zu extrahieren, die Backup-Informationen zu normalisieren und die normalisierten Backup-Informationen in der konsolidierten Tracking-Datenbank (20) zu speichern; und
- einen regelbasierten Policy-Archivmanager, der benutzerdefinierte Regeln zur Medienbewegung akzeptiert, mit der konsolidierten Tracking-Datenbank (20) gekoppelt ist und Anweisungen zur Bewegung von Backup-Medien aus der Datenverarbeitungsumgebung ausgibt.

2. Medienverwaltungssystem nach Anspruch 1, wobei die Backup-Informationen Dateninhalte von Speichermedien umfassen.

3. Medienverwaltungssystem nach Anspruch 1, wobei die Datenverarbeitungsumgebung getrennte Betriebssysteme und eine Vorrichtung zur Backupaufzeichnung auf Band umfasst.

4. Medienverwaltungssystem nach Anspruch 1, das Exportagenten zum Schreiben von Backup-Informationen in entsprechende Backup-Anwendungen umfasst.

5. Medienverwaltungssystem nach Anspruch 1, wobei der Policy-Manager die Verfolgung, Nutzung und Aufgabe von Bandmedien einschließt.

6. Medienverwaltungssystem nach Anspruch 1, mit einer Bandbibliothek, die mit der Backup-Anwendung und der konsolidierten Tracking-Datenbank verbunden ist.

7. Medienverwaltungssystem nach Anspruch 6, umfassend ein mit der Bandbibliothek verbundenes Steuerprogramm zur Steuerung der Aufzeichnung von Daten von den Plattformen auf Band in der Bandbibliothek.

8. Medienverwaltungssystem nach Anspruch 1, mit einer Eingabekonsole, die mit der konsolidierten Tracking-Datenbank zur Annahme der benutzerdefinierten Regeln gekoppelt ist.

9. Medienverwaltungssystem nach Anspruch 1, mit einem Berichtsmanagers zur Ausgabe von Entnahmelisten und Löschlisten.

10. Verfahren zur Speichermedienverwaltung in einer heterogenen Datenverarbeitungsumgebung, umfassend:
Anschließen einer Mehrzahl von Servern (10) an ein Netzwerk;
Ausführen einer Backup-Anwendung auf jedem Server (10) zum Sichern von Daten auf dem Server (10) auf Speichermedien, wobei mindestens zwei der Backup-Anwendungen sich voneinander unterscheiden;
Speichern von Informationen über die Speichermedien in einer nativen Form, die von den entsprechenden Backup-Anwendung verwendbar ist;
Extrahieren von Informationen über die Speichermedien aus der nativen Form und Normalisieren der Informationen über die Speichermedien;
Speichern der normalisierten Speichermedieninformationen in einer konsolidierten Tracking-Datenbank (20); und
Verwalten der Bewegung und des Ortes der Speichermedien unter Verwendung der konsolidierten Tracking-Datenbank (20).

11. Verfahren nach Anspruch 10, wobei der Verwaltungsschritt die Teilschritte des Bewegens der Speichermedien an einem bestimmten Zeitpunkt zu einem von der Datenverarbeitungsumgebung entfernten Ort und eine Wartung der Speichermedien an dem entfernten Ort über einen bestimmten Zeitraum umfasst.

12. Verfahren nach Anspruch 10, wobei der Verwaltungsschritt die Eingabe von die Bewegung der Speichermedien an einen externen Ort betreffende Policies (Leitlinien) in die Tracking-Datenbank umfasst.

13. Verfahren nach Anspruch 10, welches das Verfolgen des Ortes der Speichermedien in der Datenverarbeitungsumgebung und an externen Orten unter Verwendung der konsolidierten Tracking-Datenbank einschließt.

14. Verfahren nach Anspruch 10, welches die Berichterstattung über den Ort, den Inhalt und die Verwendung der Speichermedien einschließt.

15. Verfahren nach Anspruch 10, wobei die Datenverarbeitungsumgebung ein Speichernetzwerk (SAN), eine Mehrzahl von unterschiedlichen Betriebssystemen, eine Mehrzahl von unterschiedlichen Servern und eine Mehrzahl von unterschiedlichen Backup-Anwendungen umfasst.

16. Backup-Speichermedienmanager für eine heterogene Datenverarbeitungsumgebung, der Folgendes umfasst:
- eine konsolidierte Tracking-Datenbank (20) zum Speichern von Orts- und Inhaltsinformationen betreffend die Backup-Speichermedien;
- eine Mehrzahl von Importagenten (32), wobei jeder Importagent mit einer Backup-Anwendung auf einem Server der Datenverarbeitungsumgebung verbunden ist und wobei jeder Importagent (32) dazu dient:
i. Orts- und Inhaltsinformationen von der Backup-Anwendung zu extrahieren, wobei die Orts- und Inhaltsinformationen von Informationen extrahiert werden, die von der Backup-Anwendung in einer nativen Form gespeichert sind;
ii. Die extrahierten Orts- und Inhaltsinformationen zu normalisieren; und
iii. Die normalisierten Orts- und Inhaltsinformationen in der konsolidierten Tracking-Datenbank (20) zu speichern;
und
- eine Schnittstelle (26) mit der konsolidierten Tracking-Datenbank (20), zur Annahme benutzerdefinierter Bewegungs- und Speicher-Policies für Backup-Speichermedien.

17. Speichermedienmanager nach Anspruch 16, der eine Mehrzahl von Exportagenten zum Extrahieren von Orts- und Inhaltsinformationen aus der konsolidierten Datenbank und zum Exportieren der Informationen in Backup-Anwendungen umfasst.

18. Speichermedienmanager nach Anspruch 16, der eine Schnittstelle zu einer Bandbibliothek zum Erfassen der Beschriftung und des Inhalts von Speichermedien in der Bandbibliothek und zum Speichern der Beschriftungs- und Inhaltsinformationen in der konsolidierten Datenbank umfasst.

## Revendications

1. Système de gestion de supports destiné à être utilisé dans un environnement informatique comportant plusieurs plates-formes et systèmes d'exploitation disparates, chacun ayant une application de sauvegarde, le système comprenant :
- une base de données de suivi unifiée (20),
- une pluralité d'agents d'importation (32), chaque agent d'importation (32) étant propre à une application de sauvegarde spécifique et pouvant être utilisé pour extraire des informations de sauvegarde de l'application de sauvegarde dans un format natif utilisable par l'application de sauvegarde, pour normaliser lesdites informations de sauvegarde, et enregistrer les informations de sauvegarde normalisées dans ladite base de données de suivi unifiée (20) et
- un gestionnaire documentaire de procédures piloté par règles, qui reçoit des règles définissables par l'utilisateur pour le déplacement des supports, s'interface avec la base de données de suivi unifiée (20) et génère en sortie des instructions pour déplacer les supports de sauvegarde depuis l'environnement informatique.

2. Système de gestion de supports selon la revendication 1, les informations de sauvegarde comprenant le contenu des supports de stockage.

3. Système de gestion de supports selon la revendication 1, l'environnement informatique comprenant des systèmes d'exploitation disparates et un dispositif d'enregistrement de sauvegarde de bandes.

4. Système de gestion de supports selon la revendication 1, comprenant des agents d'exportation pour écrire les informations de sauvegarde dans les applications de sauvegarde respectives.

5. Système de gestion de supports selon la revendication 1, le gestionnaire de procédures comprenant l'utilisation et la mise au rebut des bandes de suivi.

6. Système de gestion de supports selon la revendication 1, comprenant une bibliothèque de bandes connectée à l'application de sauvegarde et à la base de données de suivi unifiée.

7. Système de gestion de supports selon la revendication 6, comprenant un programme de commande couplé à la bibliothèque de bandes pour commander l'enregistrement des données sur bande, depuis les plates-formes, dans la bibliothèque de bandes.

8. Système de gestion de supports selon la revendication 1, comprenant une console d'entrée interfacée à la base de données de suivi unifiée pour recevoir les règles définissables par l'utilisateur.

9. Système de gestion de supports selon la revendication 1, comprenant un gestionnaire de rapports pour générer en sortie des listes de sélection et des listes de retrait.

10. Procédé de gestion de supports de stockage dans un environnement informatique hétérogène, comprenant :
la connexion d'une pluralité de serveurs (10) à un réseau ;
l'utilisation ou la mise en oeuvre d'une application de sauvegarde sur chaque serveur (10) pour sauvegarder des données sur ce serveur (10) vers les supports de stockage, au moins deux des applications de sauvegarde étant différentes ;
le stockage d'informations couvrant les supports de stockage dans un format natif utilisable par l'application de sauvegarde respective ;
l'extraction des informations des supports de stockage depuis ledit format natif, et la normalisation des informations des supports de stockage ;
le stockage desdites informations normalisées de supports de stockage dans une base de données de suivi unifiée (20) ; et
la gestion du déplacement et de l'emplacement desdits supports de stockage en utilisant ladite base de données de suivi unifiée (20).

11. Procédé selon la revendication 10, dans lequel ladite étape de gestion comprend des sous-étapes de déplacement des supports de stockage vers un emplacement distant depuis ledit environnement informatique, à un temps désigné, et le maintien des supports de stockage dans ledit emplacement distant durant une période désignée.

12. Procédé selon la revendication 10, dans lequel l'étape de gestion comprend l'entrée de procédures dans la base de données de suivi unifiée, concernant le déplacement des supports de stockage vers un emplacement hors site.

13. Procédé selon la revendication 10, comprenant le suivi de l'emplacement des supports de stockage dans l'environnement informatique et dans les emplacements hors site, en utilisant ladite base de données de suivi unifiée.

14. Procédé selon la revendication 10, comprenant la génération de rapports sur l'emplacement, le contenu et l'usage des supports de stockage.

15. Procédé selon la revendication 10, dans lequel l'environnement informatique comprend un réseau de stockage (SAN), une pluralité de différents systèmes d'exploitation, une pluralité de différents serveurs, et une pluralité de différentes applications de sauvegarde.

16. Gestionnaire de supports de stockage de sauvegarde pour un environnement informatique hétérogène, comprenant :
- une base de données de suivi unifiée (20), pour enregistrer des informations d"emplacement et de contenu concernant les supports de stockage de sauvegarde,
- une pluralité d'agents d'importation (32), chaque agent d'importation étant connecté à une application de sauvegarde sur un serveur dans l'environnement informatique, chaque agent d'importation (32) pouvant être utilisé pour :
i. extraire les informations d'emplacement et de contenu de l'application de sauvegarde, lesdites informations d'emplacement et de contenu étant extraites des informations stockées par l'application de sauvegarde dans un format natif,
ii. normaliser lesdites informations d'emplacement et de contenu extraites, et
iii. enregistrer lesdites informations d'emplacement et de contenu extraites dans ladite base de données de suivi unifiée (20) ; et
- une interface (26) vers ladite base de données de suivi unifiée (20) comportant des fonctions pour recevoir les procédures de déplacement et de stockage des supports de stockage de sauvegarde définies par l'utilisateur.

17. Gestionnaire de supports de stockage selon la revendication 16, comprenant une pluralité d'agents d'exportation utilisables pour extraire des informations d'emplacement et de contenu de ladite base de données unifiée, et pour exporter lesdites informations vers des applications de sauvegarde.

18. Gestionnaire de supports de stockage selon la revendication 16, comprenant une interface vers une bibliothèque de bandes pour détecter l'écriture et le contenu de supports de stockage dans la bibliothèque de bandes, et pour enregistrer lesdites informations d'écriture et de contenu dans ladite base de données unifiée.
